# EUROPÄISCHE PATENTSCHRIFT

(11) **EP 0 583 734 B1**
(45) Veröffentlichungstag und Bekanntmachung des Hinweises auf die Patenterteilung: **27.12.1996**
(21) Anmeldenummer: 93112907.6
(22) Anmeldetag: 12.08.1993
(51) Int. Cl.: A01D 34/67

(54) **Arbeitsgerät zur Bearbeitung von Pflanzen oder dgl., insbesondere Fadenschneider**
Working tool for processing plants or else, especially trimmer
Outil de travail pour traiter des plantes ou similaires, notamment tondeuse à fil de coupe

(30) Priorität: 20.08.1992 DE 4227486
(43) Veröffentlichungstag der Anmeldung: 23.02.1994
(73) Patentinhaber: GARDENA Kress + Kastner GmbH, D-89079 Ulm (DE)
(72) Erfinder:
(74) Vertreter: Patentanwälte Ruff, Beier, Schöndorf und Mütschele

(56) Entgegenhaltungen:
- DE-A- 2 115 921
- DE-A- 3 005 807
- DE-B- 2 166 513
- US-A- 3 229 452

## Beschreibung

Die Erfindung betrifft ein Arbeitsgerät nach dem Oberbegriff des Patentanspruches 1. Das Gerät kann z.B. durch Schlagen, Schneiden, Scheren oder dgl. eines einzigen oder mehrerer Werkzeuge Bearbeitungen und/oder trennschnittartige Arbeiten ausführen. Die Arbeitsbewegung des jeweiligen Werkzeuges kann schwenkend bzw. rotierend und/oder im wesentlichen linear vorgesehen sein. Gesonderte Werkzeuge können unterschiedlich ausgebildet sein und/oder unterschiedliche Arbeitsbewegungen haben.

Im Falle von Fadenschneidern mit einem oder mehreren rotierenden Schneidflächen bzw. Werkzeugrotoren kann der Schneidfaden unter den auftretenden Zentrifugalkräften im wesentlichen radial frei fliegend so gestreckt gehalten werden, daß er auch dickere Pflanzenstiele oder dgl. durchschlägt. Bei Trenngeräten der beschriebenen Art bzw. bei anderen als Ganzes mobil arbeitenden Geräten, die ggf. ohne Eigenantrieb oder Lenkvorrichtung manuell über die Arbeitsfläche bewegt oder geleitet werden, besteht das Bedürfnis Gefahrenzonen und/oder leicht beschädigbare Zonen mit einer oder mehreren Abdeckungen abzuschirmen. Sollen solche Zonen, insbesondere bei Betrieb sich bewegende Bauteile, trotzdem zugänglich sein, so ist die jeweilige Abdeckung dadurch in eine Freigabestellung zu überführen, daß sie entweder vollständig vom Gerät abnehmbar oder durch eine Verschiebe- bzw. Schwenkbewegung oder dgl. in diese Stellung zu überführen ist. In der Freigabestellung können dann z.B. Wartungsarbeiten, Werkzeugwechsel, Reparaturen oder dgl. durchgeführt werden, ohne daß zur Überführung der Abdeckung besonderes oder irgendein Werkzeug erforderlich wäre, da diese zerstörungsfrei leicht lösbar zwischen der Betriebsstellung und der Freigabestellung hin und her bewegt werden kann. Liegt eine solche Abdeckung im Arbeitsbereich des Gerätes, so ist sie während des Arbeitens durch äußere Gegenstände Belastungen ausgesetzt, die ein versehentliches Überführen in die Freigabestellung bewirken können. Ferner besteht in Freigabestellung der Abdeckung die Gefahr einer versehentlichen Inbetriebnahme des Trenngerätes, z.B. des Antriebes und des Werkzeuges, was dann zu Verletzungen der Bedienungsperson führen kann.

Einen solchen Fadenschneider zeigt die DE-A-3 005 807, wobei die Abdeckung kufenartig an der Unterseite des Werkzeugrotors liegt, jedoch nur der Fadennachstellung dient. Der DE-A-2 115 921 ist ein Rasenmäher mit einer Sicherheitsvorrichtung zu entnehmen, bei welchem durch das Anbringen und Entfernen einer Grasfang- bzw. Ablenkvorrichtung der Motor auf Betriebsstellung oder auf Leerlauf gestellt wird. Eine ähnliche Ausbildung zeigt auch die DE-B-2 166 513, bei welcher durch die Sicherheitsvorrichtung eine elektromagnetische Kupplung betätigt wird. Schließlich zeigt die US-A-3 229 452 eine Sicherheitsvorrichtung für einen von einem Sitz aus fahrbaren Rasenmäher, bei welchem wahlweise drei Schalter den Motor abstellen bzw. dessen Anstellen verhindern, nämlich wenn der Sitz nicht belastet ist, wenn die Antriebsverbindung zum Werkzeug nicht unterbrochen ist bzw. wenn ein Steuerhebel für Vorwärts- und Rückwärtsfahrt nicht in Neutralstellung steht.

Der Erfindung liegt ferner die Aufgabe zugrunde, ein Arbeitsgerät zu schaffen, bei welchem Nachteile bekannter Ausbildungen bzw. der beschriebenen Art vermieden sind und das insbesondere bei verhältnismäßig einfacher Ausbildung eine erhöhte Sicherheit z.B. dadurch gewährleistet, daß verschließbare Bereiche dann gegen unmittelbare Berührung empfindlicher bzw. verletzungsfähiger Anordnungen gesichert sind, wenn sie geöffnet sind.

Erfindungsgemäß sind die Merkmale des Patentanspruches 1 vorgesehen. Durch Steuermittel kann in Abhängigkeit von einer oder mehreren Stellungen der jeweiligen Abdeckung eine Abschaltung wenigstens des zugehörigen Innenbereiches des Gerätes hinsichtlich zugehöriger Arbeitsbewegungen, elektrischer Strombeaufschlagungen oder dgl. erfolgen. Vorteilhaft ist diese Abschaltung so vorgesehen, daß sie bereits wirksam ist, wenn die Abdeckung nur um einen sehr geringen Weg aus der Betriebslage herausbewegt ist und daher ihre Verschlußfunktion im wesentliche noch vollständig erfüllt. Zwischen dieser Stellung und allen anderen übrigen denkbaren Freigabestellungen bleibt die Abschaltung aufrechterhalten. Im Falle eines Fadenschneiders kann z.B. an der Unterseite eines rotierenden Werkzeugkopfes eine Abdeckung vorgesehen sein, die als Bodenabstützung bzw. als Gleitkufe für das gesamte Trenngerät geeignet und daher durch das zu bearbeitende Gelände und die Pflanzen verhältnismäßig großen Stoßbelastungen ausgesetzt ist. Solche Belastungen können zum Öffnen der Abdeckklappe führen, und durch die erfindungsgemäße Ausbildung wird dann innerhalb höchstens weniger Sekunden der Werkzeugkopf stillgesetzt bzw. ohne Zeitverzögerung die zugeführte Antriebsleistung unterbrochen, z.B. durch Abschalten bzw. Kurzschließen eines oder mehrerer Stromkreise.

Zur Erzielung möglichst geringer Abmessungen befindet sich die Betätigung für die jeweilige Abschaltung zweckmäßig im Bereich der Lagerung der zugehörigen oder einer anderen Abdeckungen, so daß diese Betätigung verhältnismäßig gut mit dieser Lagerung im wesentlichen dicht verkapselt und dadurch gegen Partikelverschmutzung bzw. Befeuchtung gesichert werden kann.

Geräte der beschriebenen Art weien meist einen an einem Trag- bzw. Führungsgriff vorgesehenen Betriebsschalter auf, der nach Art eines Sicherheitsschalters manuell in Betriebsstellung gehalten werden muß, da er sonst von selbst in AusStellung springt. Die Abschaltung durch die Abdeckung ist zweckmäßig so gewählt, daß sie auch bei betätigtem Betriebsschalter wirksam ist, diesen also funktionell überbrückt, so daß selbst bei in Ein-Stellung verklemmtem Betriebsschalter eine Abschaltung erfolgen kann. Die Abdeckung ist zweckmäßig allein durch manuelles Greifen und Aufreißen in Freigabestellung überführbar, so daß sie praktisch auch als Handhabe bzw. Betätigungsglied zur Abschaltung dienen kann.

Eine besonders vorteilhafte Weiterbildung besteht darin, daß Sicherungsmittel vorgesehen sind, durch welche zusätzlich zum Abschalten bzw. Verzögern einer Arbeitsbewegung noch eine weitere Sicherung eingerückt wird, z.B. eine Bremse zur noch schnelleren Stillsetzung einer Arbeitsbewegung innerhalb höchstens einer Sekunde nach Auslösen der Abschaltung. Der oder die bewegten Teile des Gerätes werden dadurch schneller stillgesetzt, als es üblicherweise möglich ist, die Abdeckung so weit in Freigabestellung zu überführen, daß der zugehörige bewegbare Teil überhaupt von außen zugänglich ist. Zweckmäßig arbeitet die Bremse berührungsfrei als Magnetfeldbremse, Kompressionsbrems oder dgl., je nachdem, ob als Antriebsmotor ein Elektromotor, ein Verbrennungsmotor oder dgl. vorgesehen ist. Dadurch ist die Bremse im Gegensatz zu einer Reibungsbremse im wesentlichen vollständig verschleißfrei.

Unabhängig von der beschriebenen Ausbildung oder zusätzlich hierzu kann es vorteilhaft sein, an einem Gerät der beschriebenen Art eine jederzeit durch die Bedienungsperson willkürlich betätigbare Not-Verzögerung für wenigstens einen eine Arbeitsbewegung ausführenden Bauteil, insbesondere für das gesamte Gerät, vorzusehen, die auch bei Ein-Stellung des Betriebsschalters aktivierbar ist. Dadurch kann z.B. in den genannten Gefahrenfällen oder bei Überlastung des Gerätes selbst dann eine schnelle Stillsetzung erfolgen, wenn der Betriebschalter nicht sofort in Aus-Stellung zu überführen ist.

Unabhängig von den beschriebenen Ausbildungen oder zusätzlich dazu, ist es ferner bei einem Gerät der beschriebenen Art vorteilhaft, eine oder mehrere Gerätefunktionen mit einem Pedal beeinflussen bzw. steuern zu können. Dieses Pedal ist so angeordnet, daß die Bedienungsperson es dann bequem mit einem Fuß erreichen kann, wenn sie das Gerät in der für den Arbeitseinsatz des Gerätes bestimmungsgemäßen Weise z.B. ein- oder zweihändig hält.

Das Pedal liegt bevorzugt über einer Boden-Abstützfläche im tiefsten Bereich des Gerätes bzw. eines Arbeits- oder Gerätekopfes, mit welcher das Gerät auf den Boden aufgesetzt und dadurch gegen den Pedal-Betätigungsdruck verhältnismäßig starr abgestützt werden kann. Ist die Trittfläche des Pedales nach oben weisend schräg nach vorne geneigt und/oder ballig gekrümmt, so ist sie auch bei nicht genau mittig auftreffendem Fuß trotzdem gut zu betätigen. Dies gilt noch mehr, wenn im Abstand vor der Trittfläche ein diese nach oben überragender Anschlag für die Fuß- bzw. Schuhspitze oder Schuhseite vorgesehen ist, da dann der Fuß in seiner Längsrichtung oder quer bei Anschlag in der geeignesten Weise gegenüber der Trittfläche z.B. so ausgerichtet ist, daß die Trittfläche im vorderen Drittel der Schuhsohle liegt. Die Höhe des Anschlages beträgt zweckmäßig mehrere Zentimeter, z.B. zwischen höchstens 5 und mindestens 10 cm, so daß der Anschlag auch als Gleitfläche für die Schuhspitze dienen kann, um den Fuß der Bedienungsperson bei der Abwärtsbewegung gegenüber der Trittfläche des Pedales ausgerichtet zu führen.

Die durch das Pedal bzw. die Pedale zu beeinflussenden Funktionen können z.B. eine Stillsetzung des Gerätes, eine Ingangsetzung des Gerätes, Schaltfunktionen während des laufenden Betriebes des Gerätes, kurzzeitige Antriebsunterbrechungen oder dgl. sein.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ein Ausführungsbeispiel der Erfindung ist in den Zeichnungen dargestellt und wird im folgenden näher erläutert. In den Zeichnungen zeigen:
- Fig. 1: ein erfindungsgemäßes Trenngerät in Seitenansicht und einer Arbeitslage,
- Fig. 2: einen Ausschnitt der Fig. 1 in einem wesentlich vergrößterten Schnitt und
- Fig. 3: den Gerätekopf des Trenngerätes gemäß Fig. 1 in vergrößerter sowie teilweise geschnittener Darstellung.

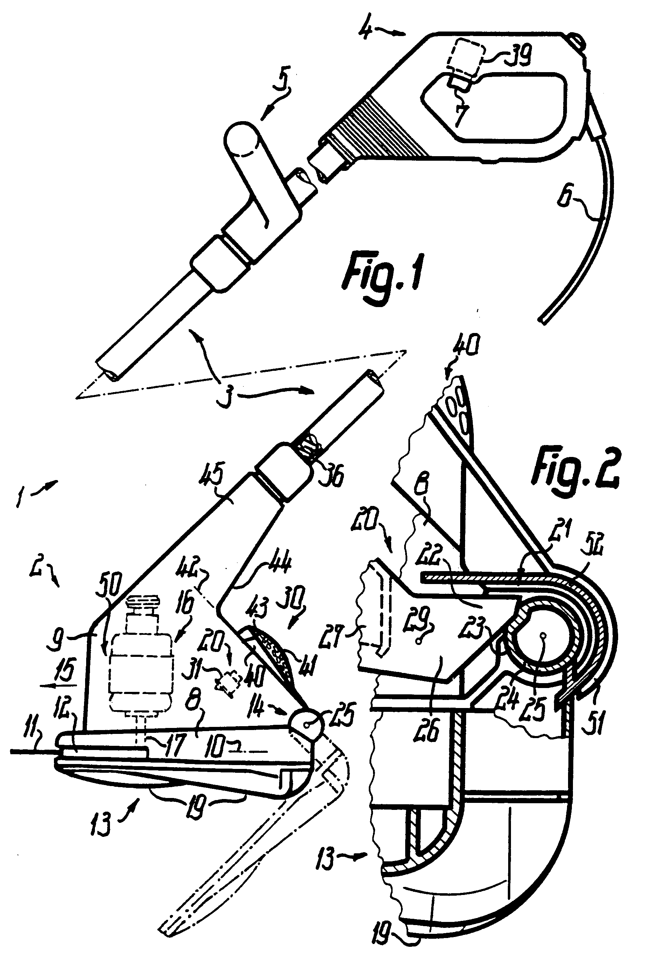

Das Trenngerät 1 gemäß den Figuren 1 bis 3 ist ein Fadenschneider, der ähnlich wie eine Sense mit zwei Händen frei und auch ohne weitere Abstützung getragen sowie hin und her schwingend bewegt werden kann, um längerstielige Pflanzen zu trennen. Der unterste Bereich ist durch einen Gerätekopf 2 gebildet, von dessen Oberseite ein annähernd geradlinig abstehender, einstieliger Stockholm 3 nach oben absteht. Dieser weist am oberen Ende einen Führungsgriff 4 mit bügelförmigem Handschutz und darunter mit Abstand oberhalb des Gerätekopfes 2 einen Bügelgriff 5 auf, der quer zum Stockholm 3 an dessen Vorder- bzw. Oberseite liegt. Die beiden Griffe 4, 5 sind zum Halten mit jeweils einer Hand der Bedienungsperson vorgesehen. Vom hinteren Ende des Führungsgriffes 4 ist ein elektrisches Anschlußkabel 6 zur elektrischen Stromversorgung des Trenngerätes 1 weggeführt, in dessen entsprechende Leitung innerhalb des Führungsgriffes 4 ein Betriebsschalter zwischengeschaltet ist, dessen frei an der Unterseite des Griffstückes des Führungsgriffes 4 liegendes Betätigungsglied 7 gedrückt gehalten werden muß, um den Arbeitsbetrieb des Trenngerätes 1 aufrecht zu erhalten. Bei Freigabe des Betätigungsgliedes 7 wird das Trenngerät 1 sofort abgeschaltet und es läuft unter den wirksamen Massenträgheitskräften bei geringer Reibung noch eine zeitlang bis zum Stillstand aus, nämlich z.B. etwa eine halbe oder eine Minute.

Haupttragkörper für die im Gerätekopf 2 vorgesehenen Bauteile ist eine nach unten offen schalenförmige Konsole 8, an deren Oberseite ein äußeres Gehäuse 9 so befestigt ist, daß die Konsole 8 seine auf voller Gehäuseweite offene Unterseite deckelartig verschließt. Das Gehäuse 9 ist nach oben bis zum unteren Ende des Stockholmes 3 verlängert und mit diesem zerstörungsfrei lösbar verbunden.

Unmittelbar unterhalb eines nach oben versetzten unteren Kantenbereiches der Konsole 8 ist ein Werkzeug 11 in einer Arbeits-Ebene 10 rotierend bewegbar, gegenüber welcher der Stockholm 3 unter einem spitzen Winkel von etwa 45° nach hinten geneigt ist. Das Werkzeug 11 steht frei über den Außenumfang eines Rotors bzw. Werkzeug-Kopfes 12 vor, der annähernd diskusscheibenförmig flach ausgebildet, in der Mitte seiner Höhe mit einem radial vorstehenden Ringflansch versehen und auf einer oder beiden axial an diesen anschließenden Seiten wenigstens teilweise annähernd stumpfwinklig verjüngt ist, so daß seine größte Außenweite mindestens das Doppelte, insbesondere das 3- bis 4-fache seiner Axialerstreckung beträgt. Die zur Arbeitsebene 10 rechtwinklige Drehachse des Kopfes 12 liegt näher bei der Vorder- als bei der Rückseite des Gerätekopfes 2. Das oder die gleichmäßig über den Umfang verteilten Werkzeuge 11 werden bei Rotation durch Fliehkraft etwa rechtwinklig zur Drehachse über den Außenumfang des Gerätekopfes 2 hinausragend annähernd geradlinig gestreckt.

Der Schale der Konsole 8 liegt eine entgegengesetzt offene Schale gegenüber, so daß der Kopf 12 annähernd vollständig umkleidet innerhalb eines dadurch gebildeten Gehäuseraumes liegt, welcher beiderseits seitlich und/oder nach vorne über das Gehäuse 9 vorsteht. Dieser Gehäuseraum ist lediglich über einen Teilumfang durch Abstand zwischen der genannten Kantenfläche und der unteren Schale offen, damit das Werkzeug 11 durch die so gebildete Schlitzöffnung in den vorderen und seitlichen Bereichen des Gerätekopfes 2 aus diesem heraustreten und im hinteren bereich wieder eintreten kann. Die untere Schale ist durch eine Abdeckung 13 gebildet, welche in Draufsicht annähernd gleiche Größe wie die Schale der Konsole 8 hat und nach Art eines Klappdeckels um eine Lagerung 14 gemäß Fig. 1 nach unten und hinten in Freigabestellungen geklappt werden kann. Die Lagerung 14 befindet sich an der Rückseite des Gerätekopfes 2 bzw. der Konsole 8 und oberhalb der Arbeitsebene 10 etwa in Höhe des oberen Endes des Kopfes 12 bzw. an der Oberseite der Konsole 8. Die zur Arbeitsebene 10 etwa parallele Haupt-Bewegungs- bzw. -Vorschubrichtung Pfeil 15 des Gerätekopfes 2 beim Arbeiten entspricht der Richtung von der Lagerung 14 zum davon entfernten Ende der Abdeckung 13.

Ein innerhalb des Gehäuses 9 quer zur Arbeitsebene 10 stehender Antrieb bzw. Motor 16 ist annähernd an der Oberseite der Konsole 8 lagefest befestigt und zweckmäßig achsgleich zum Kopf 12 unmittelbar oberhalb von diesem angeordnet. Eine nach unten aus dem Motor 16 herausragende Motor- bzw. Abtriebswelle 17 durchsetzt den Kopf von dessen oberer Stirnseite her wenigstens teilweise und ist mit dem Kopf 12 drehschlüssig verbunden. Ggf. unter Zwischenschaltung einer Einrichtung zur radial nach außen gerichteten Nachstellung des jeweiligen Werkzeuges 11 durch Abwickeln eines mit seinem Ende dieses bildenden flexiblen Stranges, der innerhalb des Kopfes 12 in einem Speicher gespeichert bzw. auf einer Spule aufgewickelt ist. Diese Nachstelleinrichtung kann auch durch Drücken eines als Taste ausgebildeten Betätigungsgliedes 18 ausgelöst werden, das sich an der vom Antrieb 16 abgekehrten unteren Stirnseite des Kopfes 12 innerhalb der Abdeckung 13 befindet.

Nach Öffnen der Abdeckung 13 kann das Betätigungsglied 18 direkt manuell betätigt werden, während es bei geschlossener Abdeckung 13 durch Aufschlagen des Gerätekopfes 2 auf den Boden dadurch betätigt werden kann, daß die Abdeckung 13 dabei eine in sich rückfedernde Bewegung nach oben ausführt und über einen entsprechenden inneren Nocken das Betätigungsglied 18 mitnimmt. Die Abdeckung 13 bildet mit ihrer von der Konsole 8 abgekehrten Unterseite eine oder mehrere Kufen 19 bzw. Kufenflächen, insbesondere drei an den Ecken eines gedachten, spitzwinkligen und/oder annähernd gleichschenkligen Dreiecks liegende Kufenflächen. Jede dieser im Abstand voneinander liegenden Kufenflächen kann ballig gekrümmt sein, wobei im hinteren Bereich unterhalb der Lagerung 14 zwei Kufenflächen quer zur Richtung 15 nebeneinander liegen.

Der Abdeckung 13 ist eine Abschalt-Einrichtung 20 zugeordnet, die im Sinne einer Geräteabschaltung sofort wirksam wird, wenn die Abdeckung 13 aus der Betriebslage nur um wenige Winkelgrade herausgeschwenkt wird, z.B. etwa 20° oder weniger als 10 bzw. 5°. Die Abschaltung wird bereits wirksam, wenn das vordere freie Ende der Abdeckung 13 mit 2 bis 3 cm einen Weg zurückgelegt hat, der zwischen einem Fünftel und einem Siebtel des Außendurchmessers des Kopfes 12 entspricht.

Die Einrichtung 20 wird über einen mechanischen Steuertrieb bzw. eine Betätigung 21 gesteuert, dessen Betätigungsglied 22 näher bei der Lagerung 14 als beim vorderen Ende der Abdeckung 13 bzw. im Bereich der Lagerung 14 liegt. Das Betätigungsglied 22 wird durch einen Schaltnocken 23 betätigt, welcher im wesentlichen synchron mit der Abdeckung 13 um eine zur Arbeitsebene 10 parallele und quer bzw. rechtwinklig zur Richtung 15 liegende Achse, insbesondere die Achse 25 der Lagerung 14, drehbar gelagert ist. Der Schaltnocken 23 hat gegenüber der Außenweite der freiliegenden Flächen der Lagerung 14 kleinere Radialerstreckung, so daß er wie die Lagerung 14 nach außen durch Verkapselung vollständig abgedeckt sein kann. Dadurch geht die Außenfläche der Lagerung im wesentlichen über deren gesamte Länge kontinuierlich durch.

Der Schaltnocken 23 bzw. die diesen bildende Steuerkurve kann durch den Außenumfang eines rohrförmigen Achszapfens 24 gebildet sein, welcher z.B. achsgleich zwischen solchen Achszapfen oder seitlich äußeren Lagerhülsen liegt, mit welchen die Abdeckung 13 an der Konsole 8 gelagert ist.

Das Betätigungsglied 22 ist durch das freie Ende eines nach hinten frei ausragenden Armes 26 eines zweiarmigen Winkelhebels gebildet, dessen nach vorne und schräg oben frei ausragender zweiter Arm 27 im wesentlichen oberhalb der Konsole 8 innerhalb des Gehäuses 9 liegt. Am freien Ende bildet dieser Arm 27 als Betätigungsmitnehmer einen Schalt-Schenkel 28. Der Hebel 26, 27 ist um eine Achse 29 schwenkbar gelagert, die mit geringem Abstand vor der Lagerung 14 und zur Achse 25 etwa parallel sowie annähernd in deren Höhe liegt. Der Abstand der Achsen 25, 29 von der Arbeitsebene 10 ist etwa gleich groß wie der Abstand der durch die Kufen 19 gebildeten Gleitebene von der Arbeitsebene 10. Diese Gleitebene liegt vorteilhaft unter einem spitzen, sich nach vorne im Abstand vor dem Flugkreis des Werkzeuges 11 schließenden Winkel zur Arbeitsebene 10. Dieser Winkel kann in der Größenordnung von 2 bis 10°, insbesondere etwa 4°, liegen und bewirkt, daß bei auf dem Boden stehender Kufe 19 die Arbeitsebene 10 entsprechend schräg nach vorne unten geneigt ist, jedoch durch Abrollen des Gerätekopfes 2 auf der hinteren Kufenfläche 19 stufenlos zu derjenigen Lage hin überführt werden kann, in welcher die Arbeitsebene 10 parallel zur Ebene des Bodens liegt oder gegenüber diesem schräg nach oben gerichtet ist. Mit dem Arbeitsbereich des Werkzeuges 11 können daher unter Bodenabstützung in vorteilhafter Weise etwa vertikale Ausrichtbewegungen ausgeführt werden.

Die Einrichtung 20 ist mit einer zusätzlichen, willkürlich durch die Bedienungsperson betätigbaren Not-Verzögerung 30 insofern baulich vereinigt, als bis auf die Betätigungsglieder im wesentlichen alle übrigen Bauteile sowohl für die Einrichtung 20 als auch für die Verzögerung 30 gemeinsam vorgesehen sind. Hierzu gehört ein innerhalb des Gehäuses 9 oberhalb der Konsole 8 etwa in Höhe des Motors 16 liegender elektrischer Schalter 31, der zwischen dem Motor 16 und der Rückseite des Gerätekopfes 2 vorgesehen ist. Der Schalter 31 weist an seiner von dieser Rückseite abgekehrten Seite eine Schalt-Wippe 32 auf, die an dem Schaltersockel bzw. in dem Schaltergehäuse um eine zur Arbeitsebene 10 bzw. zu den Achsen 25, 29 etwa parallele Querachse schwenkbar gelagert ist.

Der Schalter 31 ist an einer Leiterplatte 33 in Richtung zum Rotor 12 frei abstehend befestigt, welche die elektrischen Schaltelemente für den Motor 16 trägt und auf der vom Schalter 31 abgekehrten Seite an einer Tragplatte 34 befestigt ist. Die Tragplatte 34 ist durch Schnappverbindungen im Gehäuse 9 zerstörungsfrei leicht lösbar befestigt. An der von den Platten 33, 34 abgekehrten Seite ist am Arm 27 und vor der Achse 29 eine vorgespannte Rückstellfeder 35 abgestützt, die in Form einer Schraubendruckfeder in einer zentrierenden Federkammer der Konsole 8 liegt. Die Federkammer weist Achsschlitze zum zentrierten Eingriff eines Führungssteges des Armes 27 auf, an dem auch die Rückstellfeder 35 in jeder Stellung vollständig innerhalb der Federkammer liegend abgestützt ist.

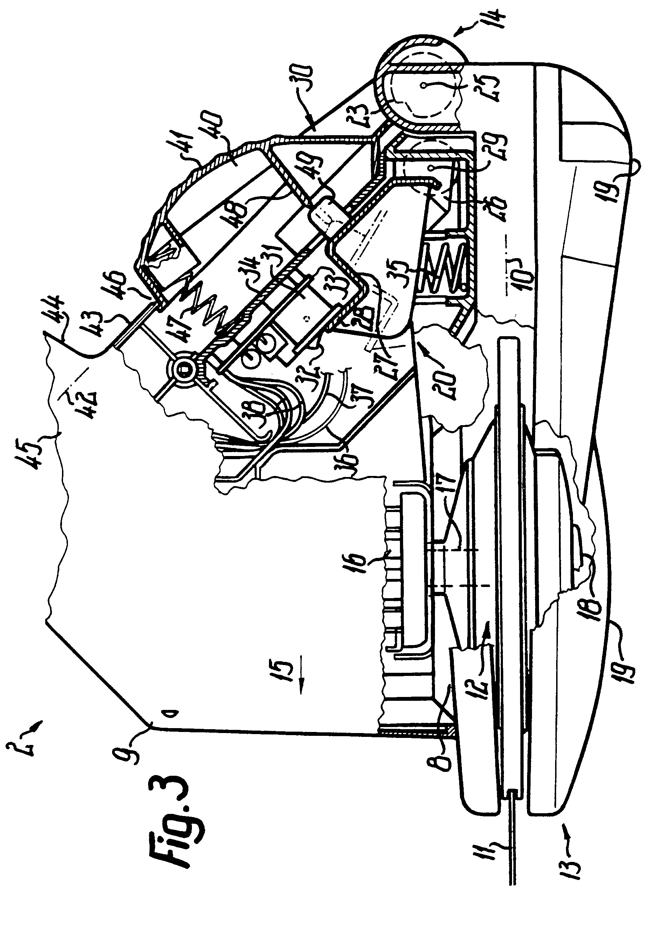

In der Betriebsstellung steht der Schalter 31 in Ein-Stellung dadurch, daß der Schenkel 28 den zugehörigen Wippenschenkel der Wippe 32 in dieser Stellung unter der Kraft der Rückstellfeder 35 hält, nämlich durch frei abhebbare Druckanlage an diesem Wippenschenkel. Die Wippe 32 ist gegenüber dem Schaltergehäuse zur anderen Schaltstellung, nämlich zur Aus-Stellung, durch eine innerhalb des Schaltergehäuses liegende Feder federbelastet. Wird der Schenkel 28 von der Wippe 32 in der in Fig. 3 strichpunktiert angedeuteten Weise abgehoben, so wird der zugehörige Wippenschenkel freigegeben, und die Wippe 32 bzw. der Schalter 31 springt sofort in die zugehörige Stellung. Nach Freigabe durch die Einrichtung 20 kehrt der Schenkel 28 unter der Kraft der Rückstellfeder 35 von selbst in seine Betriebsstellung zurück, d.h. er läuft gegen den zugehörigen Wippenschenkel auf und überführt die Wippe 32 selbsttätig in die Ein-Stellung.

Vom Betriebsschalter 39 des Betätigungsgliedes 7 ist eine Verbindungsleitung 36 durch das Innere des Stockholmes 3 hindurch zu einem schaltbaren Kontaktpaar des Schalters 31 und von diesem als Betriebsleitung 37 zum Motor 16 geführt. Bei den genannten Stellungen der beiden Schalter 31, 39 ist daher der Betriebsstromkreis des Motors 16 geschlossen. Ggf. über mindestens ein gesondertes Kontaktpaar des Schalters 31 sind Bremsleitungen 38 eines Kurzschluß- bzw. Brems-Stromkreises geführt, wobei hierzu der Schalter 31 auch als Umschalter ausgebildet sein kann, der einen zwischen zwei feststehenden Gegenkontakten mit der Wippe 32 wahlweise hin und her bewegbaren Steuerkontakt aufweist. Die Bremsleitungen 38 sind zum Kurzschließen des Motors 16 so vorgesehen, daß dieser nach Art einer Magnetfeld-Bremse 50 auf stark verzögernden Generatorbetrieb umgeschaltet wird.

Die entsprechenden Kontakte der Schalter 31, 39 sind somit hinsichtlich der Betriebsleitungen 37 in Reihe geschaltet. Ist einer der beiden Schalter 31, 39 in Aus-Stellung, so kann der Antrieb 16 nicht in Betrieb genommen werden, d.h. für den Betrieb muß das Betätigungsglied 7 betätigt und das Betätigungsglied 22 unbetätigt sein. Wird nun die Abdeckung 13 aus ihrer Betriebslage herausbewegt, so nimmt der Schaltnocken 23 ohne Verzögerung das Betätigungsglied 22 nach oben schwenkend mit und hält es beim weiteren Öffnen der Abdeckung 13 in dieser Lage, da die Steuerfläche des Schaltnockens annähernd vollzylindrisch mit nur einer einzigen Vertiefung für den annähernd spielfreien Eingriff des Betätigungsgliedes 22 in der Betriebslage ausgebildet ist. Der Arm 27 bzw. der Abstand des Schenkels 28 von der Achse 29 ist wesentlich länger als der Arm 26, so daß sich eine Übersetzung ergibt und der Schenkel 28 einen wesentlich größeren Schwenkweg zurücklegt.

Er gibt daher, noch bevor das Betätigungsglied 22 die Nockenvertiefung ganz verlassen hat, die Wippe 32 bereits so weit frei, daß der Schalter 31 in Aus-Stellung springt. Nach Zurückschwenken der Abdeckung 13 in die ggf. durch Federrastung leicht überwindbar gesicherte Betriebslage gelangt der Schalter 31 in der beschriebenen Weise von selbst wieder in seine Ein-Stellung. Es können mehrere ähnliche oder gleiche Schaltnocken 23 axial benachbart zueinander vorgesehen und eine oder mehrere davon als Rast-Gegenglieder ausgebildet sein, in welche Rastnocken zur Festlegung der Abdeckung 13 in der Betriebslage eingreifen. Dadurch, daß der Schaltnocken 23 zur Schwenkbewegung des Betätigungsgliedes 22 gleichgerichtet dreht, kann durch entsprechend steile Ausbildung der zugehörigen Nockenflanke die Steuerbewegung des Schenkels 28 beschleunigt werden.

An der Rückseite des Gerätekopfes 2 ist mit geringem Abstand oberhalb der Lagerung 14 bzw. der Arbeitsebene 10 ein Betätigungsglied 40 in Form einer Pedal-Drucktaste vorgesehen, deren mit etwa 3 bis 9, insbesondere 6 cm Durchmesser verhältnismäßig große, flachballig gewölbte sowie mit einem Noppenraster versehene Trittfläche 41 etwas parallel zu einer Ebene 42 liegt, die zur Arbeitsebene 10 bzw. zur Gleitebene unter einem sich nach vorne öffnenden spitzen Winkel in der Größenordnung von 45° oder mehr vorgesehen ist. Die durch die Außenseite des Bodens eines Kappenkörpers gebildete Trittfläche ist am Außenumfang eng von einer Stützfläche 43 umgeben, welche durch die Außenseite des Gehäuses 9 gebildet ist, etwa in der Ebene 42 liegt und vorne sowie beiderseits bis zur Lagerung 14 an den Mantel des Kappenkörpers bzw. das Betätigungsglied 40 anschließen kann.

Mit einem Abstand von wenigen, z.B. 3 bis 4 cm, vor der Trittfläche 41 geht die Stützfläche 43 in eine schräg nach oben und hinten geneigte Anschlagfläche 44 über, die ebenfalls durch die Rückseite 9, nämlich einen an die Oberseite des erweiterten Gehäusehauptteiles anschließenden, in der Weite wesentlich reduzierten Kopfschaft 45 gebildet ist. Dieser, annähernd achsgleich zum Stockholm 3 nach hinten geneigt liegende Kopfschaft 45 ist nach oben spitzwinklig konisch verjüngt und mit seinem freien Ende unmittelbar mit dem unteren Ende des Stockholmes 3 verbunden. Durch die beschriebene Ausbildung ist die in Ruhelage etwa 1 bis 3, insbesondere 2 cm über die Stützfläche 43 vorstehende Trittfläche 41 nicht nur von der Rückseite des Gerätekopfes 2, sondern auch von beiden Seiten sowie schräg von vorne her jederzeit zugänglich sowie aufgrund ihrer Leichtgängigkeit dafür geeignet, gleichermaßen von Hand betätigt zu werden.

Der Mantel des Kappenkörpers bzw. das Betätigungsglied 40 durchsetzt in der Ruhelage die Stützfläche 43 im Bereich einer entsprechend eng angepaßten Öffnung 46. Die zugehörige Wand hintergreift der Kappenkörper mit einem Anslagbund, welcher am offenen Ende des Kappenmantels vorgesehen ist und die Ruhelage festlegt. Zu dieser Ruhelage ist das Betätigungsglied 40 durch eine von der Rückstellfeder 35 gesonderte Rückstellfeder 47 belastet, die in Nähe des freien Endes des Betätigungsgliedes 40 an diesem sowie an der vom Schalter 31 abgekehrten Seite der Tragplatte 34 abgestützt ist. In Achsrichtung der Trittfläche 41 gesehen, liegen der Schalter 31 sowie die Platten 33, 34 annähernd in Decklage mit dem Betätigungsglied 40.

Das Betätigungsglied 40 ist um eine Achse schwenkbar gelagert, deren Lage derjenigen entspricht, die anhand der Achsen 25, 29 erläutert ist und die mit einer dieser Achsen 25, 29 zusammenfallen kann. Daher liegt diese Achse etwa parallel zur Ebene 42 unterhalb der Trittfläche 41 des so stehend ausgebildeten Pedales 40, das etwa in der Mitte der Breite des Gerätekopfes 2 vorgesehen sein kann. An der Innenseite und auf der den Achsen 25, 29 zugekehrten Seite des Schenkels 28 weist das Betätigungsglied 40 einen frei vorstehenden Mitnehmer 48 auf, der mit seiner Endfläche gleit- und/oder abwälzbar an der Gegen- bzw. Stirnfläche eines Nockens 49 anliegt, welcher zwischen dem Schenkel 28 und der Achse 29 an dem Arm 27 befestigt ist. Dieser Nocken 49 durchsetzt eine Öffnung in der Tragplatte 34.

Niederdrücken des Betätigungsgliedes 40 führt somit zur Mitnahme des Schenkels 28 zur strichpunktiert angedeuteten Aus-Stellung, wobei das Betätigungsglied 22 ungehindert von der Nockenkurve 23 abheben kann. Die Trittfläche 41 läßt sich dabei bis in eine zur Stützfläche 43 annähernd ebenengleiche Lage hineindrücken, so daß bei Anlage des die Trittfläche 41 am Umfang überragenden Fusses die Endstellung des Betätigungsgliedes 40 praktisch anschlagbegrenzt ist. Freigabe des Betätigungsgliedes 40 führt dazu, daß dieses durch die Rückstellfeder 47 in die Ruhelage zurückbewegt wird, ggf. unter Abheben des Mitnehmers 48 vom Nocken 49. Ist nämlich inzwischen die Abdeckung 30 aus der Betriebslage herausgeschwenkt worden, so hält der Schaltnocken 23 den Schenkel 28 über das Betätigungsglied 22 in der abgehobenen Stellung. Sobald dann die Abdeckung wieder in die Betriebslage überführt wird, schaltet auch der Schenkel 28 den Schalter 31 wieder in seine Ein-Stellung.

Die Einrichtung 20 und die Verzögerung 30 sind somit mechanisch parallelgeschaltet, so daß beide wahlweise zur Umschaltung des gemeinsamen Schalters 31 betätigt werden können, der Schalter 31 jedoch in seine Ein-Stellung nur dadurch überführt werden kann, daß die Abdeckung 13 in Betriebslage und das Betätigungsglied 40 in Ruhelage steht. Über beide Einrichtungen 20, 30 können daher die genannten Wirkungen erzielt werden.

Bei Betätigung des Betätigungsgliedes 40 wird der Kopf 12 über die Abtriebswelle 17 durch den Antrieb 16 innerhalb von weniger als einer Sekunde stillgesetzt, falls die Betätigung so lange aufrechterhalten bleibt. Durch eine kürzerzeitige Betätigung, nämlich eine sofort wieder aufgehobene Schlagbetätigung, kann die Verzögerung 30 einen Steuerimpuls abgeben, welcher dafür geeignet ist, die beschriebene Nachstellung für das jeweilige Werkzeug 11 so auszulösen, daß der flexible Strang um einen Nachstellschritt abgewickelt und dadurch das Werkzeug 11 entsprechend verlängert oder nach Abnutzung wieder auf die ursprüngliche Länge gebracht wird.

Die Trittfläche 41 liegt so, daß sie mit dem Fuß der Bedienungsperson auch dann leicht erreicht werden kann, wenn diese das Trenngerät 1 in der beschriebenen Weise an den Griffen 4, 5 betriebsgerecht hält bzw. mit dem Trenngerät 1 die bestimmungsgemäßen Arbeiten ausführt. Entsprechend gut kann das Betätigungsglied 40 auch erreicht werden, wenn das Trenngerät 1 nur an einem der Griffe 4, 5 gehalten bzw. getragen wird. Da die Trittfläche 41 in Ansicht rechtwinklig zur Gleitebene bzw. zur Arbeitsebene 10 und/oder in Ansicht parallel zu ihrer Mittelachse innerhalb der durch die Kufenflächen 19 gebildeten Bodenabstützung des Trenngerätes 1 liegt, kann sie nicht nur bei unabgestützt frei getragenem Trenngerät 1, sondern auch dann sehr gut betätigt werden, wenn das Trenngerät 1 mit der Kufe 9 auf dem Boden aufsitzt, die dann eine sichere Abstützung gegen den Pedaldruck gewährleistet.

Die Bremskraft bzw. -Energie der Bremse50 ist gegenüber derjenigen, die zur Betätigung des Pedales 40 bzw. zum Herausbewegen der Abdeckung 13 aus der Betriebslage erforderlich ist, wesentlich, z.B. mindestens in der Größenordnung des bis zum 10-fachen, verstärkt und kann bis mindestens zum 100-fachen jedes etwa ganzzahlige Vielfache davon betragen.

Das Betätigungsglied 40 weist an dem von der Trittfläche 41 entfernten Hebelende zwei im Abstand nebeneinanderliegende Lagerschalen 51 auf, mit welchem das Betätigungsglied 40 auf den Achszapfen 24 schwenkbar und im Umfangsabstand zur Nockenvertiefung gelagert sein kann. An der Außenseite der jeweiligen Lagerschale 51 kann dann eines von zwei Betätigungsgliedern 22 liegen, die durch gabelförmige Ausbildung des Armes 26 gebildet sind. Beide Teile 51, 22 liegen dann zwischen zwei beiderseits an den Achszapfen 24 anschließenden, vorstehenden Schulterflächen, so daß sie durch diese und gegenseitige Berührung axial im wesentlichen spielfrei gesichert sind. Gegen radiales Abheben vom Achszapfen 24 ist die jeweilige Lagerschale 51 durch ein zerstörungsfrei leicht lösbares Glied gesichert, das gleichzeitig eine schalenförmige Abschirmung 52 für den Achszapfen 24, die Nockenkurve 23 und/oder das Betätigungsglied 42 bildet, so daß diese trotz guter Zugänglichkeit nach außen verdeckt sind. Die Abdeckung 13 läßt sich zweckmäßig über einen Winkel von mindestens 45° oder bis zu mindestens etwa 180° um jedes etwa ganzzahlige Vielfache davon schwenken.

Alle Bauteile, Räume und Anordnungen können jeweils nur einzeln oder in einer Mehrzahl von zwei oder mehr vorgesehen sein, beispielsweise um mehrere zu einem Trenngerät zusammengefaßte Geräte- bzw. Werkzeugköpfe unabhängig voneinander und/oder gemeinsam in der beschriebenen Weise betreiben zu können.

## Patentansprüche

1. Arbeitsgerät zur Bearbeitung von Pflanzen oder dgl., insbesondere Fadenschneider mit mindestens einem an einem Geräte-Grundkörper (8) in einer Arbeitsbewegung antreibbar zu lagernden Werkzeug (11) und mit wenigstens einer zwischen einer Schutzstellung und einer Freigabestellung überführbaren Abdeckung (13) für mindestens einen zu schützenden Bauteil, wie ein Werkzeug (11), dadurch gekennzeichnet, daß wenigstens eine in Abhängigkeit von der Lage mindestens einer Abdeckung (13) gesteuerte Abschalteinrichtung (20) zum Stillsetzen wenigstens eines Bauteiles vorgesehen ist.

2. Arbeitsgerät nach Anspruch 1, dadurch gekennzeichnet, daß mindestens eine Abdeckung (13) wenigstens teilweise im Bereich einer Geräteabstützung (19) liegt, daß insbesondere eine Abdeckung (13) einer Bodenabstützung bzw. Gleitkufe (19) zugeordnet ist und daß vorzugsweise eine Abdeckung (13) einem Arbeits-Abstandhalter für ein Werkzeug (11) zugeordnet ist und/oder wenigstens teilweise unterhalb des Werkzeuges (11) liegt.

3. Arbeitsgerät nach Anspruch 1 oder 2, dadurch gekennzeichnet, daß mindestens eine Abdeckung (13) für ein drehend arbeitendes Werkzeug (11) vorgesehen ist, das insbesondere wenigstens ein ein Werkzeug (11) tragender Werkzeugkopf (12) an einer von einer Antriebswelle (17) abgekehrten Stirnseite und/oder an einem Teilumfang von einer Abdeckung (13) abgedeckt ist und daß vorzugsweise eine Abdeckung (13) schalenförmig ist bzw. eine schlitzförmige Durchtrittsöffnung für ein Werkzeug (11) begrenzt.

4. Arbeitsgerät nach einem der vorhergehenden Ansprüche, dadurch gekennzeichnet, daß mindestens eine Abdeckung (13) über eine Lagerung (14) bewegbar an dem Grundkörper (8) gelagert ist, daß insbesondere eine Abdeckung (13) als im wesentlichen einarmiger Hebel schwenkbar gelagert ist und daß vorzugsweise eine Abdeckung (13) um eine zu einer Arbeitsebene (10) eines Werkzeuges (11) etwa parallele und/oder zum Trenngerät (1) querliegende hintere Lagerachse (25) in Arbeitsstellung des Trenngerätes (1) nach unten in eine Freigabestellung schwenkbar ist.

5. Arbeitsgerät nach einem der vorhergehenden Ansprüche, dadurch gekennzeichnet, daß mindestens eine Abschalteinrichtung (20) wenigstens einen über mindestens ein Betätigungsglied (22, 40) zu betätigenden Schalter (31), wie einen elektrischen Schalter (31) mit mindestens einem Kontaktpaar, aufweist, daß insbesondere ein Betätigungsglied (22) in Betätigungseingriff mit einer Abdeckung (13) steht und/oder wenigstens ein Betätigungsglied (40) unabhängig von der Lage einer Abdeckung (13) zur unmittelbaren Betätigung durch eine Bedienungsperson zugänglich ist und daß vorzugsweise wenigstens ein Betätigungsglied (22, 40) im Bereich einer Lagerung (14) einer Abdeckung (13) angeordnet bzw. gelagert ist.

6. Arbeitsgerät nach einem der vorhergehenden Ansprüche, dadurch gekennzeichnet, daß mindestens eine Abdeckung (13) wenigstens eine mechanische Betätigung (21) für wenigstens eine Abschalteinrichtung (20) aufweist, daß insbesondere eine mechanische Betätigung (21) eine Steuerfläche (23) aufweist und daß vorzugsweise eine mechanische Betätigung (21) einen schwenkbar gelagerten und/oder im Bereich eines Lagergliedes (51) einer Abdekkung (13) vorgesehenen Schaltnocken (23) für eine Abschalteinrichtung (20) aufweist.

7. Arbeitsgerät nach einem der vorhergehenden Ansprüche, dadurch gekennzeichnet, daß mindestens eine Abdeckung (13) wenigstens einen Achszapfen (24) aufweist, daß insbesondere ein Achszapfen (24) wenigstens teilweise als Schaltkurve (23) für eine Abschalteinrichtung (20) ausgebildet ist und daß vorzugsweise ein Achszapfen (24) mit einem Außenumfang in Betätigungseingriff mit einer Abschalteinrichtung (20) bzw. einem schwenkbaren Betätigungsglied (22) steht.

8. Arbeitsgerät nach einem der vorhergehenden Ansprüche, dadurch gekennzeichnet, daß mindestens eine Abschalteinrichtung (20), wie eine gesamte zugehörige Abschalt-Steuerung, im wesentlichen vollständig gegenüber dem Arbeitsbereich verkapselt innerhalb eines wenigstens ein Werkzeug (11) aufnehmenden Geräte-Gehäuses (8, 9) angeordnet ist, daß insbesondere für eine mechanische Betätigung einer Abschalteinrichtung (20) mindestens ein aufgesetzter Deckel (52) vorgesehen ist und daß vorzugsweise ein Achszapfen (24) einer Abdeckung (13) von einer gesonderten Abschirmschale (52) im Abstand umgeben ist.

9. Arbeitsgerät nach einem der vorhergehenden Ansprüche, dadurch gekennzeichnet, daß mindestens einer Abschalteinrichtung (20) wenigstens eine Bremse (50), zugeordnet ist, daß insbesondere eine Bremse (50) mit im wesentlichen berührungsfreiem Bremswiderstand ausgebildet und/oder durch mindestens einen auf Bremsbetrieb umschaltbaren Antriebsmotor (16) für das Werkzeug (11) gebildet ist und daß vorzugsweise mindestens ein Werkzeug (11) unmittelbar auf einer Motorwelle (17) eines Motors (16) angeordnet ist.

10. Arbeitsgerät nach einem der vorhergehenden Ansprüche, dadurch gekennzeichnet, daß mindestens eine Abschalteinrichtung (20) wenigstens einen in Betriebstellung selbstumschaltend zur Abschaltstellung federbelasteten Spring-Schalter (31) aufweist, daß insbesondere ein an einem Schalter (31) vorgesehenes Betätigungsglied (32) durch wenigstens ein Betätigungsglied (28) einer Abschalteinrichtung (20) unter und/oder gegen Federkraft formschlüssig in Betriebstellung gehalten ist und daß vorzugsweise ein Betätigungsglied (28) einer Abschalteinrichtung (20) zu seiner der Betriebstellung eines Schalters (31) zugehörigen Stellung mit einer Rückstellfeder (35) belastet ist.

11. Arbeitsgerät nach einem der vorhergehenden Ansprüche, dadurch gekennzeichnet, daß mindestens eine Abschalteinrichtung (20) wenigstens einen in Reihe mit mindestens einem manuell zu betätigenden Betriebschalter (39) für ein Werkzeug (11) angeordneten Schalter (31) aufweist, daß insbesondere ein Betriebschalter (39) als selbstrückstellender Tastschalter ausgebildet ist und daß vorzugsweise ein Betriebschalter (39) im Bereich eines Führungsgriffes (4) zum Führen des Trenngerätes (1) beim Arbeiten und/oder ein Schalter (31) einer Abschalteinrichtung (20) an einem ein Werkzeug (11) aufnehmenden Gerätekopf (2) angeordnet ist, der mit dem Führungsgriff (4) über einen Stockholm (3) verbindbar ist.

12. Arbeitsgerät, nach Anspruch 1, dadurch gekennzeichnet, daß ein unabhängig von der Lage einer eventuellen Abdeckung (13) willkürlich betätigbare Not-Verzögerung (30) für die Arbeitsbewegung mindestens eines Werkzeuges (11) vorgesehen ist, daß insbesondere die Not-Verzögerung (30) eine Bremse (50) für ein Werkzeug (11), wie die der Abschalteinrichtung (20) zugehörige Bremse (50), aufweist und daß vorzugsweise ein Betätigungsglied (40) für die Not-Verzögerung (30) oberhalb der Arbeitsebene (10) eines Werkzeuges (11) im Bereich eines dieses aufnehmenden Gerätekopfes (2) angeordnet ist und/oder auf einen Schalter (31) einer Abschalteinrichtung (20) wirkt.

13. Arbeitsgerät, nach Anspruch 1, dadurch gekennzeichnet, daß mindestens ein Betätigungsglied (40) zum Abschalten und/oder in Gang setzen einer Arbeitsbewegung eines Werkzeuges (11) als Pedaltaste ausgebildet ist, daß insbesondere eine Pedaltaste (40) bei betriebsgerechtem Halten des Trenngerätes mit dem Fuß der Bedienungsperson erreichbar ist und daß vorzugsweise eine Pedaltaste (40) an einer Rückseite des Trenngerätes (1) im Bereich der Oberseite eines geneigten Schenkels (43) eines Ausrichtwinkels (43, 44) für den Fuß der Bedienungsperson liegt, mit ihrer Innenseite einem Schalter (31) gegenüberliegt und/oder in Seitenansicht im spitzen Winkel zu einer Abdeckung (13) vorgesehen ist.

## Claims

1. An implement for the treatment of plants or the like, particularly a filament-type trimmer comprising at least one tool (11) to be mounted on an implement base (8) drivable in a working movement and at least one cover (13) translatable between a security position and a released position for at least one component to be protected, such as a tool (11), characterized in that at least one power OFF means (20) controlled as a function of the location of at least one cover (13) is provided for rendering at least one component motionless.

2. The implement as set forth in claim 1, characterized in that at least one cover (13) is located at least partly in the region of an implement support (19), that in particular a cover (13) is assigned to a ground support or skid (19) and that preferably a cover (13) is assigned to a working spacer for a tool (11) and/or is located at least partly beneath the tool (11).

3. The implement as set forth in claim 1 or 2, characterized in that at least one cover (13) is provided for a rotary working tool (11), that in particular at least one tool head (12) carrying a tool (11) is covered by a cover (13) at an end face facing away from an input shaft (17) and/or at a partial periphery and that preferably one cover (13) is bowl-shaped or defines a slot-shaped passage opening for a tool (11).

4. The implement as set forth in any of the preceding claims, characterized in that at least one cover (13) is mounted movable on said base (8) via a mounting fixture (14), that in particular one cover (13) is swivably mounted as a substantially single-armed lever and that preferably one cover (13) is swivable about a rear journal (25) located roughly parallel to a working plane (10) of a tool (11) and/or transversely to the parting implement (1) in the working position of said parting implement (1) downwards into a release position.

5. The implement as set forth in any of the preceding claims, characterized in that at least one power OFF means (20) comprises at least one switch (31) to be actuated via at least one actuating member (22, 40) such as an electric switch (31) having at least one pair of contacts, in that particularly one actuating member (22) is in actuating engagement with one cover (13) and/or at least one actuating member (40) is accessible for direct actuation by an operator and in that preferably at least one actuating member (22, 40) is arranged or mounted in the region of a mounting fixture (14) of a cover (13).

6. The implement as set forth in any of the preceding claims, characterized in that at leat one cover (13) includes at least one mechanical actuator (21) for at least one power OFF means (20), that in particular one mechanical actuator (21) includes a control flank (23) and in that preferably one mechanical actuator (21) includes a switch cam (23) swivably mounted and/or provided in the region of a mounting member (51) of a cover (13) for a power OFF means (20).

7. The implement as set forth in any of the preceding claims, characterized in that at least one cover (13) includes at least one journal (24), that in particular one journal (24) is configured at least in part as a switch cam (23) for a power OFF means (20) and in that preferably one journal (24) is in actuatable engagement by an outer periphery with a power OFF means (20) or a swivable actuating member (22).

8. The implement as set forth in any of the preceding claims, characterized in that at least one power OFF means (20), such as a fully associated shut-off control is arranged substantially completely encapsulated with respect to the working portion within an implement housing (8, 9) accommodating at least one tool (11), that in particular for one mechanical actuation of a power OFF means (20) at least one mounted shield (52) is provided and in that preferably one journal (24) of a cover (13) is spacingly surrounded by one separate shield (52).

9. The implement as set forth in any of the preceding claims, characterized in that at least one power OFF means (20) is assigned at least one brake (50), that in particular one brake (50) is configured with a substantially contactless plugging resistor and/or at least one pluggable drive motor (16) for said tool (11), and in that preferably at least one tool (11) is disposed directly on an input shaft (17) of a motor (16).

10. The implement as set forth in any of the preceding claims, characterized in that at least one power OFF means (20) comprises at least one spring-loaded switch (31) automatically changing over from the operating position to the OFF position, that in particualar one actuating member (32) provided on a switch (31) is positively maintained in the operating position by at least one actuating member (28) of a power OFF means (20) under and/or against spring force and in that preferably one actuating member (28) of a power OFF means (20) is urged into its position belonging to the operating position of a switch (31) by a return spring (35).

11. The implement as set forth in any of the preceding claims, characterized in that at least one power OFF means (20) comprises at least one switch (31) arranged in series with at least one manually operated operating switch (39) for a tool (11), that in particular one operating switch (39) is configured as an automatically resetting pushbutton switch and in that preferably one operating switch (39) is disposed in the region of a guide handle (4) for guiding the parting tool (1) when working therewith and/or a switch (31) of a power OFF means (20) on a tool head (2) accommodating a tool (11), said tool head (2) being connectable to said guide handle (4) via a hollow pole (3).

12. The implement as set forth in claim 1, characterized in that an emergency delay (30) optionally actuatable independently of the position of any cover (13) is provided for the working movement of at least one tool (11), that in particular the emergency delay (30) comprises a plugging brake (50) for a tool (11), such as the plugging brake (50) belonging to the power OFF means (20), and in that preferably an actuating member (40) is arranged for said emergency delay (30) above the working plane (10) of a tool (11) in the region of a tool head (2) accomodating the latter and/or affects a switch (31) of a power OFF means (20).

13. The implement as set forth in claim 1, characterized in that at least one actuating member (40) for shutting off and/or starting a working movement of a tool (11) is configured as a pedal button (40), that in particular a pedal button (40) is reachable by the foot of the operator when said parting tool is held properly for operation and in that preferably a pedal button (40) is provided on a rear side of said parting tool (1) in the region of the upper side of an inclined leg (43) of an orienting angle (43, 44) for the foot of the operator, the inner side of which is located opposite a switch (31) and/or in an acute angle to a cover (13) as viewed from the side.

## Revendications

1. Appareil pour traiter des plantes ou analogues, notamment coupe-herbe à fil comprenant au moins un outil (11) destiné à être monté sur un corps de base d'appareil (8) de manière à pouvoir être entraîné dans un mouvement de travail, et au moins un capot (13) pour au moins un élément à protéger tel qu'un outil (11), qui peut passer d'une position de protection à une position de libération et inversement, caractérisé en ce qu'est prévu au moins un coupe-circuit (20) commandé en fonction de la position du capot (13) et destiné à mettre hors service au moins un élément.

2. Appareil selon la revendication 1, caractérisé en ce qu'au moins un capot (13) est au moins partiellement situé dans la zone d'un appui (19) de l'appareil, en ce que notamment un capot (13) est associé à un appui ou patin de glissement (19), et en ce que, de préférence, un capot (13) est associé à une butée de travail pour un outil (11) et/ou se trouve au moins en partie sous l'outil (11).

3. Appareil selon la revendication 1 ou 2, caractérisé en ce qu'est prévu au moins un capot (13) pour un outil rotatif (11), en ce que notamment au moins une tête porte-outil (12) portant un outil (11) est recouverte par un capot (13) sur une face frontale opposée à l'arbre menant (17) et/ou sur une partie du pourtour, et en ce que, de préférence, un capot (13) a la forme d'une coupe ou délimite une ouverture de passage en forme de fente pour un outil (11).

4. Appareil selon l'une des revendications précédentes, caractérisé en ce qu'au moins un capot (13) est monté de façon mobile sur le corps de base (8) par l'intermédiaire d'un palier (14), en ce que notamment un capot (13) est monté de façon pivotante en tant que levier pour l'essentiel à bras unique, et en ce que, lorsque le coupe-herbe (1) est en position de travail, de préférence un capot (13) peut pivoter vers le bas, dans une position de libération, autour d'un axe de palier arrière (25) approximativement parallèle à un plan de travail (10) d'un outil (11) et/ou transversal par rapport au coupe-herbe (1).

5. Appareil selon l'une des revendications précédentes, caractérisé en ce qu'au moins un coupe-circuit (20) présente au moins un interrupteur (31) actionné par le biais d'au moins un organe d'actionnement (22, 40), tel qu'un interrupteur électrique (31) muni d'au moins une paire de contacts, en ce que notamment un organe d'actionnement (22) est en prise d'actionnement avec un capot (13) et/ou au moins un organe d'actionnement (40) est accessible à un opérateur pour être actionné directement, indépendamment de la position d'un capot (13), et en ce que, de préférence, au moins un organe d'actionnement (22, 40) est situé ou monté dans la zone d'un palier (14) d'un capot (13).

6. Appareil selon l'une des revendications précédentes, caractérisé en ce qu'au moins un capot (13) présente au moins un actionnement mécanique (21) pour au moins un coupe-circuit (20), en ce que notamment un actionnement mécanique (21) présente une surface de commande (23), et en ce que, de préférence, un actionnement mécanique (21) présente une came de contacteur (23) pour un coupe-circuit (20), qui est montée de manière pivotante et/ou prévue dans la zone d'un élément de palier (51) d'un capot (13).

7. Appareil selon l'une des revendications précédentes, caractérisé en ce qu'au moins un capot (13) présente au moins un tourillon (24), en ce que notamment un tourillon (24) est au moins en partie réalisé en tant que courbe de commande (23) pour un coupe-circuit (20), et en ce que, de préférence, un tourillon (24) est en prise d'actionnement avec un pourtour extérieur avec un coupe-circuit (20) ou avec un organe d'actionnement pivotant (22).

8. Appareil selon l'une des revendications précédentes, caractérisé en ce qu'au moins un coupe-circuit (20), tel qu'une commande de coupure globale, est logé dans un carter (8, 9) recevant au moins un outil (11) en étant pour l'essentiel totalement isolé par rapport au domaine de travail, en ce que notamment pour un actionnement mécanique d'un coupe-circuit (20), au moins un couvercle posé (52) est prévu, et en ce que, de préférence, un tourillon (24) d'un capot (13) est, de préférence, entouré à distance par une coque de protection séparée (52).

9. Appareil selon l'une des revendications précédentes, caractérisé en ce qu'au moins un frein (50) est associé à au moins un coupe-circuit (20), en ce que notamment un frein (50) est réalisé avec une résistance de freinage essentiellement sans contact et/ou est formé par au moins un moteur d'entraînement (16) pour l'outil (11) pouvant être commuté en mode de freinage, et en ce que, de préférence, au moins un outil (11) est disposé directement sur un arbre menant (17) d'un moteur (16).

10. Appareil selon l'une des revendications précédentes, caractérisé en ce qu'au moins un coupe-circuit (20) présente au moins un interrupteur à bascule sollicité par un ressort (31), qui bascule automatiquement de la position de marche à la position d'arrêt, en ce que notamment un organe d'actionnement (32) prévu sur un interrupteur (31) est maintenu en position de marche avec un engagement positif par au moins un organe d'actionnement (28) d'un coupe-circuit (20) sous l'effet du ressort et/ou contre la force du ressort, et en ce que de préférence un organe d'actionnement (28) d'un coupe-circuit (20) est sollicité par un ressort de rappel (35) pour revenir dans sa position correspondant à la position de marche d'un interrupteur (31).

11. Appareil selon l'une des revendications précédentes, caractérisé en ce qu'au moins un coupe-circuit (20) présente au moins un interrupteur (31) monté en série avec au moins un interrupteur de fonctionnement à actionnement manuel (39) pour un outil (11), en ce que notamment un interrupteur de fonctionnement (39) est réalisé en tant qu'interrupteur à poussoir revenant de lui-même à la position initiale, et en ce que de préférence un interrupteur de fonctionnement (39) est placé dans la zone de la poignée (4) destinée à guider le coupe-herbe (1) lors de la tonte et/ou en ce qu'un interrupteur (31) d'un coupe-circuit (20) est placé sur une tête porte-outil (2) recevant un outil (11), laquelle peut être reliée à la poignée de guidage (4) par le biais d'un manche (3).

12. Appareil selon la revendication 1, caractérisé en ce qu'est prévu un retardateur de sécurité (30) pour le mouvement de travail d'au moins un outil (11) pouvant être actionné arbitrairement, indépendamment de la position d'un éventuel capot (13), en ce que notamment le retardateur de sécurité (30) présente un frein (50) pour un outil (11), tel que le frein (50) faisant partie du coupe-circuit (20), et en ce que de préférence un organe d'actionnement (40) pour le retardateur de sécurité (30) est disposé au-dessus du plan de travail (10) d'un outil (11), dans la zone d'une tête porte-outil (2) recevant ce dernier et/ou agit sur un interrupteur (31) d'un coupe-circuit (20).

13. Appareil selon la revendication 1, caractérisé en ce qu'au moins un organe d'actionnement (40) servant à couper et/ou à mettre en marche un mouvement de travail d'un outil (11) est réalisé en tant que pédale, en ce que notamment une pédale (40) est accessible pour le pied de l'utilisateur lorsque le coupe-herbe est maintenu dans la bonne position, et en ce que de préférence une pédale (40) est située sur une face arrière du coupe-herbe (1), dans la zone du dessus d'un côté incliné (43) d'un angle d'orientation (43, 44) pour le pied de l'utilisateur, fait face à un interrupteur (31) avec son côté intérieur et/ou est disposée, vue de côté, avec un angle aigu par rapport à un capot (13).
